# EUROPÄISCHE PATENTSCHRIFT

(11) **EP 2 245 849 B1**
(45) Veröffentlichungstag und Bekanntmachung des Hinweises auf die Patenterteilung: **27.03.2019**
(21) Anmeldenummer: 08870935.7
(22) Anmeldetag: 22.12.2008
(51) Int. Cl.: H04N 5/365, H04N 5/33

(54) **WÄRMEBILDKAMERA**
THERMOGRAPHIC CAMERA
CAMÉRA THERMIQUE

(30) Priorität: 19.01.2008 DE 102008005167
(43) Veröffentlichungstag der Anmeldung: 03.11.2010
(73) Patentinhaber: Testo AG, 79853 Lenzkirch (DE)
(72) Erfinder: STRATMANN, Martin, 79117 Freiburg (DE); SCHULER, Karl, 79822 Titisee-Neustadt (DE); MESSERSCHMID, Andreas, 79848 Bonndorf-Gündelwangen (DE)
(74) Vertreter: Kunst, Manuel Nikolaus Johannes
(86) Internationale Anmeldenummer: PCT/EP2008/011032
(87) Internationale Veröffentlichungsnummer: WO 2009/089897

(56) Entgegenhaltungen:
- EP-A1- 1 698 873
- WO-A-00/52435

## Beschreibung

Die Erfindung betrifft ein Infrarot(IR)-Messgerät mit einem IR-Strahlungsdetektor mit wenigstens einem Sensorelement, welches für infrarote Strahlung sensitiv ist, wobei das wenigstens eine Sensorelement als Bolometer ausgebildet ist und an eine Auswerteelektronik angeschlossen ist, mit welcher Auswerteelektronik ein von einer Integrationsdauer abhängiges Ausgangssignal des wenigstens einen Sensorelements erfassbar ist.

Die Erfindung betrifft weiter ein Verfahren zur Kompensation einer temperaturinduzierten Drift eines IR-Strahlungsdetektors eines IR-Messgeräts, wobei der IR-Strahlungsdetektor wenigstens ein Sensorelement aufweist, wobei das wenigstens eine Sensorelement als Bolometer ausgebildet ist und an eine Auswerteelektronik angeschlossen ist, wobei die Auswerteelektronik ein von einer Integrationsdauer abhängiges Ausgangssignal des wenigstens einen Sensorelements erfasst.

Derartige IR-Messgeräte und Verfahren zur Kompensation sind bekannt und werden als Pyrometer mit einem Bolometer oder als Wärmebildkameras zur Aufnahme eines thermografischen Abbildes mit einer gitterartigen Anordnung von Bolometern im IR-Strahlungsdetektor eingesetzt.

Besonders Wärmebildkameras werden zur Ermittelung von Oberflächentemperaturprofilen von Gegenständen eingesetzt. Sie werden häufig in Umgebungen mit wechselnder Temperatur eingesetzt. So wird die thermografische Analyse einer Gebäudehülle sowohl von innen als auch von außen durchgeführt. Die Wärmebildkamera wird dabei vom warmen Innenraum in die kalte Außenluft gebracht. Hierdurch wird die Kamera innerhalb kurzer Zeit einem Temperaturwechsel vom mehreren 10K ausgesetzt. Solche Temperaturwechsel bewirken Offset- und Empfindlichkeitsänderungen, welche unkompensiert zu erheblichen Messwertabweichungen führen. Die Ursache hierfür liegt zum einen in den Bolometern selbst begründet und zum anderen in der Temperaturabhängigkeit der Steuer- und Versorgungsspannungen, der Taktgenerierung und der Abstrahlung der Gehäuse, Tuben und Linsen der Wärmebildkamera.

Es sind verschiedene Methoden bekannt, um solchen Abweichungen vorzubeugen oder diese zu kompensieren. Verfahren und eine Schaltung zur Realisierung derartiger Methoden werden beispielsweise in der DE 698 30 731 T1, in der DE 10 2005 010 986 B4, in der EP 87 01 81 B1, in der EP 1 007 920 B1, in der EP 1 279 011 A2, in der US 5 756 999, in der US 5 760 398, in der US 5 763 885, in der US 6 028309, in der US 6 444 983, in der US 6465 785, in der US 6 476 392, in der US 6 538 250, in der US 6 690 013, in der US 5 953 932, in der US 7 030 378, in der US 7 105 818, in der US 56 515 285 und in der US 56 730909 beschrieben.

Nullpunktsverschiebungen können beispielsweise durch einen Shutter korrigiert werden. Hierbei wird der optische Weg durch eine Fläche mit konstanter und bekannter Temperatur verschlossen und ein Referenzbild aufgenommen. Auch gibt es Vorschläge, die Offsetverschiebung durch Subtraktion der Pixelwerte mit thermisch an das Substrat gekoppelten Pixeln zu kompensieren. Ebenso ist eine rein mathematische Korrektur, bestehend aus der Berechnung eines Korrekturwertes aus einer gemessenen Temperatur und Subtraktion dieses Korrekturwertes von dem gemessenen Pixelwert, bekannt.

Weiterhin ist die gezielte Variation des Detektornullpunktes mit Hilfe der Detektorspannung als Möglichkeit einer Nullpunktkorrektur bekannt.

Neben der Nullpunktverschiebung (offset) kann sich auch die Empfindlichkeit (gain) der Wärmebildkamera mit der Umgebungstemperatur ändern. Für eine solche Steigungsänderung wurden in der Vergangenheit ebenfalls verschiedene Kompensations- und Korrekturstrategien vorgeschlagen.

Eine weitere bekannte Variante betrifft die Unterdrückung des Temperatureinflusses auf Pixelebene durch eine aktive Stabilisierung der Detektortemperatur, beispielsweise mit einem Peltier-Element. Um eine Beeinflussung der temperaturempfindlichen Bolometer durch Schwankungen in der Umgebungstemperatur zu vermeiden, werden die IR-Strahlungsdetektoren häufig mit einer Temperaturstabilisierung versehen, welche die Betriebstemperatur des IR-Strahlungsdetektors durch bedarfsweise Kühlung oder Aufheizung auf einem konstanten, vorgegebenen Temperaturwert hält. Derartige Temperaturstabilisierungen sind jedoch aufwendig und weisen einen hohen Energieverbrauch auf, was gerade bei einfachen Handgeräten unerwünscht ist.

Weiterhin ist ein Verfahren zur nachträglichen mathematischen Korrektur bekannt. Schließlich ist eine aktive Nachführung einer weiteren Detektorspannung zur Empfindlichkeitsregelung bekannt.

Aus der WO 00/52435 A ist ein IR-Messgerät nach dem Oberbegriff des Anspruchs 1 bekannt. Bei diesem IR-Messgerät ist ein Sensorelement als blindes Sensorelement ausgebildet und vom äußeren Lichteinfall abgeschirmt. Somit reagiert das blinde Sensorelement auf die Substrattemperatur des Strahlungs-Detektors und kann als Referenzelement zur Kompensation einer Temperaturdrift der übrigen Sensorelemente dienen.

Aus der WO 01/84118 A2 sind Verfahren und Vorrichtungen zur Kompensation von Temperaturschwankungen eines Strahlungssensors bekannt, bei welchen zur Ermittlung der Umgebungstemperatur des Strahlungs-Detektors ein Temperatursensor verwendet werden kann.

Der Erfindung liegt die Aufgabe zugrunde, eine Wärmebildkamera zu schaffen, die einen einfachen konstruktiven Aufbau aufweist.

Zur Lösung dieser Aufgabe sind bei einem IR-Messgerät der eingangs genannten Art die Merkmale des Anspruchs 1 vorgesehen. Somit ist vorgesehen, dass der IR-Strahlungsdetektor an wenigstens einen Temperatursensor thermisch angekoppelt ist und dass Mittel zur Beeinflussung der Integrationsdauer durch ein Ausgangssignal des wenigstens einen Temperatursensors ausgebildet und derart eingerichtet sind, dass eine temperaturinduzierte Drift des IR-Strahlungsdetektors zumindest teilweise, insbesondere im Rahmen der Gebrauchsanforderungen und/oder der bereitgestellten Messgenauigkeit des IR-Messgeräts vollständig, kompensiert ist. Von Vorteil ist dabei, dass die Integrationsdauer als Parameter hinterlegt werden kann, der in einem Regelkreis leicht angepasst werden kann, um die Aufnahmequalität und/oder die Messeigenschaften des IR-Messgeräts bei den aktuell vorherrschenden Betriebsbedingungen zu optimieren. Diese Anpassung kann beispielsweise durch eine Software gesteuert werden, ohne dass konstruktiv und im Energieverbrauch aufwendige elektronische Steuerungsschaltungen, beispielsweise für eine Nachführung von Spannungsquellen oder eine Stromregelung, erforderlich sind. Der konstruktive Aufbau des IR-Messgeräts ist somit vereinfacht.

Die temperaturinduzierte Drift kann beispielsweise durch eine temperaturabhängige Veränderung der Empfindlichkeit des IR-Strahlungsdetektors und insbesondere des wenigstens einen Sensorelements gegeben sein. Die temperaturinduzierte Drift kann sich auch durch eine temperaturabhängige Verschiebung des Nullpunkts der Ausgangssignale des wenigstens einen Sensorelements manifestieren.

Beispielsweise kann das IR-Messgerät als ein Pyrometer oder als eine Wärmebildkamera ausgebildet sein.

Die Erfindung ist mit Vorteil bei IR-Messgeräten einsetzbar, welche ein Sensorelement aufweisen, dessen Ausgangssignal durch eine Integrationsdauer beeinflussbar ist. Beispielsweise kann diese Integrationsdauer die Zeitdauer der Erfassung und/oder Auswertung des Ausgangssignals betreffen. Das Sensorelement kann beispielsweise als Cantilever-Element ausgebildet sein, bei welchem die auftreffende IR-Strahlung eine Materialverformung aufgrund von Materialerwärmung von Materialien mit unterschiedlichen Wärmeausdehnungskoeffizienten bewirkt, wobei die Materialverformung mit ausgebildeten Mitteln resistiv, kapazitiv, induktiv, optisch oder auf sonstige Weise erfasst und zu einem Ausgangssignal verarbeitet werden kann.

Besonders günstig ist es, wenn das Sensorelement ein Bolometer ist. Bei einem Bolometer kann das Ausgangssignal beispielsweise durch Variation der Integrationsdauer für die Bestimmung des Ohmschen Widerstands im Bolometer beeinflusst werden.

Zur Erfassung einer Temperatur oder eines thermografischen Abbildes kann vorgesehen sein, dass der IR-Strahlungsdetektor eine gitterartige Anordnung von Sensorelementen aufweist, die an die Auswerteelektronik angeschlossen sind. Diese gitterartige Anordnung ist vorzugsweise in der Brennebene einer aufnehmenden IR-Optik angeordnet und/oder in einer Brennebenenanordnung in einem focal plane array(FPA)-Baustein integriert. Die Sensorelemente bilden somit die Pixel des FPA-Bausteins und des aufgenommenen Wärmebildes.

Bei einem Ausführungsbeispiel der Erfindung kann vorgesehen sein, dass zur Erfassung des von einer Integrationsdauer abhängigen Ausgangssignals Mittel zur Erfassung einer innerhalb der Integrationsdauer über das Sensorelement fließenden Ladungsmenge, insbesondere Mittel zur Bestimmung der innerhalb der Integrationsdauer mit einer vorgegebenen Spannung über das wenigstens eine Sensorelement auf einer Kapazität angesammelten Ladungsmenge, ausgebildet sind.

Es ist für viele Zwecke bereits ausreichend, wenn mit dem wenigstens einen Temperatursensor die Temperatur eines Gehäuseteils des IR-Strahlungsdetektors oder die Temperatur des Strahlungsdetektors erfassbar ist. Besonders gute Gebrauchseigenschaften des IR-Messgeräts werden erreicht, wenn mit dem wenigstens einen Temperatursensor die Temperatur in direkter Nähe des wenigstens einen Sensorelements erfassbar ist. Beispielsweise kann vorgesehen sein, dass mit dem wenigstens einen Temperatursensor eine gemittelte Temperatur von mehreren oder sogar allen Sensorelementen in einer gitterförmigen Anordnung erfassbar ist.

Gemäß einem Ausführungsbeispiel der Erfindung kann vorgesehen sein, dass das wenigstens eine Sensorelement, insbesondere alle Sensorelemente in der gitterförmigen Anordnung, an einem Substrat gehalten ist/sind und dass mit dem wenigstens einen Temperatursensor die Temperatur des Substrats erfassbar ist.

Alternativ oder zusätzlich kann vorgesehen sein, dass ein zweiter Temperatursensor verwendet wird, mit welchem die Temperatur eines Gehäuses des IR-Strahlungsdetektors erfasst wird, und dass ein Ausgangssignal des zweiten Temperatursensors die Integrationsdauer derart beeinflusst, dass eine temperaturinduzierte Drift des IR-Strahlungsdetektors zumindest teilweise kompensiert wird.

In Weiterbildungen kann auch die Temperaturdrift der Versorgungselektronik des wenigstens einen Sensorelements, welche die zum Betrieb und/oder zum Auslesen und/oder zur Steuerung des wenigstens einen Sensorelements erforderlichen Spannungen und/oder Ströme bereitstellt, durch einen Temperatursensor erfasst und wie beschrieben kompensiert werden.

Eine besonders einfache Möglichkeit zur Variation der Integrationsdauer ergibt sich, wenn die Integrationsdauer durch einen verstellbaren Taktgenerator bestimmt ist.

Zum Auslesen der Ausgangssignale des wenigstens einen Sensorelements kann vorgesehen sein, dass die Auswerteelektronik einen Analog-Digital-Wandler hat, welcher die Ausgangssignale des wenigstens einen Sensorelements und/oder des wenigstens einen Temperatursensors einem Controller in digitaler Form bereitstellt.

Zur Beeinflussung des Ausgangssignals des wenigstens einen Sensorelements zur Kompensation einer Temperaturdrift kann vorgesehen sein, dass der Controller Mittel zur Beeinflussung der Integrationsdauer, insbesondere Mittel zur Ansteuerung des Taktgenerators, aufweist.

Zum Betrieb des wenigstens einen Sensorelements kann eine elektronische Schaltung vorgesehen sein, die zur Versorgung des wenigstens einen Sensorelements mit einer konstanten Betriebsspannung eingerichtet ist.

Die Aufgabe wird bei einem Verfahren der eingangs beschriebenen Art durch die Merkmale des Anspruchs 12 gelöst. Insbesondere ist somit vorgesehen, dass der IR-Strahlungsdetektor an wenigstens einen Temperatursensor thermisch angekoppelt ist und dass ein Ausgangssignal des wenigstens einen Temperatursensors die Integrationsdauer derart beeinflusst, dass eine temperaturinduzierte Drift des IR-Strahlungsdetektors zumindest teilweise kompensiert wird.

Von Vorteil ist dabei, dass über einen großen Umgebungstemperaturbereich eine konstante Empfindlichkeit des IR-Strahlungdetektor gewährleistet werden kann.

Das Verfahren ist bei IR-Messgeräten mit einem einzigen Sensorelement, beispielsweise bei Pyrometern, oder bei IR-Messgeräten mit mehreren Sensorelementen einsetzbar. Bei einer Ausführungsform ist beispielsweise vorgesehen, dass der IR-Strahlungsdetektor eine gitterartige Anordnung von Sensorelementen aufweist, die von der Auswerteelektronik ausgewertet werden. Es ergibt sich somit eine mit einem erfindungsgemäßen Verfahren kompensierte Wärmebildkamera.

Zur Erfassung des von der Integrationsdauer abhängigen Ausgangssignals kann vorgesehen sein, dass eine innerhalb der Integrationsdauer über das Sensorelement fließenden Ladungsmenge, insbesondere eine innerhalb der Integrationsdauer mit einer vorgegebenen Spannung über das Sensorelement auf einer Kapazität angesammelten Ladungsmenge, bestimmt wird.

Die Vorteile der Erfindung werden für viele Anwendungen bereits erreicht, wenn mit dem wenigstens einen Temperatursensor die Temperatur eines Gehäuseteils des IR-Strahlungsdetektors oder die Temperatur des IR-Strahlungsdetektors erfasst wird. Für eine besonders wirkungsvolle bzw. genaue Kompensation einer Temperaturdrift des Sensorelements kann jedoch vorgesehen sein, dass mit dem wenigstens einen Temperatursensor die Temperatur in der räumlichen Nähe des wenigstens einen Sensorelements, insbesondere eine gemittelte Temperatur von mehreren oder sogar allen Sensorelementen in der gitterförmigen Anordnung von Sensorelementen, erfasst wird. Hierzu ist der wenigstens eine Temperatursensor thermisch, also gut wärmeleitend, an das Sensorelement gekoppelt. Zur Erfassung einer gemittelten Temperatur kann beispielsweise vorgesehen sein, dass die betreffenden Sensorelemente an einen Körper mit guten Wärmeleitungseigenschaften angekoppelt sind und dass der wenigstens eine Temperatursensor die Temperatur dieses Körpers erfasst.

Zur Berücksichtigung von Temperatureinflüssen der Umgebung kann vorgesehen sein, dass ein zweiter Temperatursensor verwendet wird, mit welchem die Temperatur eines Gehäuses des IR-Strahlungsdetektors erfasst wird, und dass ein Ausgangssignal des zweiten Temperatursensors die Integrationsdauer derart beeinflusst, dass eine temperaturinduzierte Drift des IR-Strahlungsdetektors zumindest teilweise kompensiert wird.

Die Integrationsdauer kann beispielsweise durch einen Taktgenerator bestimmt sein. Beispielsweise kann die Integrationsdauer durch eine bestimmte Zahl von Takten des Taktgenerators und/oder durch die zeitliche Dauer eines Taktsignals bzw. der Frequenz des Taktsignals am Taktgenerator bestimmt sein. Hierbei wird über eine gezielte Variation der den IR-Strahlungsdetektor steuernden Takte die Integrationsdauer der die Pixel bildenden Sensorelemente in Abhängigkeit von der Umgebungstemperatur oder der Temperatur des Detektors so verändert, dass die umgebungsinduzierte Änderung der Empfindlichkeit minimiert wird. Dies ermöglicht die Umrechnung des Detektorsignals in eine radiometrisch gemessene Szenetemperatur, wobei nur ein einzige Kennlinie verwendet wird. Die Abhängigkeit der Integrationsdauer von dem Ausgangssignal des wenigstens einen Temperatursensor kann als Kennlinie hinterlegt sein.

Die Variation der Integrationsdauer kann dabei so gestaltet werden, dass neben der Temperaturabhängigkeit der die Pixel formenden Sensorelemente auch die Temperaturabhängigkeit der Verstelleinrichtung zur Erzeugung der Versorgungs- und Steuerspannungen, also der elektronischen Schaltung, welche die zum Betrieb der Sensorelemente erforderlichen Betriebsspannungen oder Betriebsströme bereitstellt, kompensiert werden. Zusätzlich oder alternativ kann vorgesehen sein, dass die Variation der Integrationsdauer so gestaltet ist, dass die Temperaturabhängigkeit der Taktgenerierung kompensiert wird.

Zur Auswertung der Ausgangssignale des wenigstens einen Sensorelements kann vorgesehen sein, dass die Auswerteelektronik einen Analog-Digital-Wandler hat, welcher die Ausgangssignale des wenigstens einen Sensorelements und/oder des wenigstens einen Temperatursensors in digitale Form wandelt und an einen Controller bereitstellt.

Hierbei kann vorgesehen sein, dass der Controller die Integrationsdauer beeinflusst, insbesondere den Taktgenerator ansteuert.

Mit dem erfindungsgemäßen Verfahren ist ein Nachregeln von Steuerspannungen des wenigstens einen Sensorelements verzichtbar. Daher kann vorgesehen sein, dass das wenigstens eine Sensorelement mit einer konstanten Steuerspannung betrieben wird. Diese Steuerspannung wird in einer hierzu eingerichteten elektronischen Schaltung bereitgestellt.

Die Erfindung ermöglicht somit eine neuartige Methode zur Korrektur des Umgebungseinflusses auf die Pixelempfindlichkeit wenigstens eines Sensorelements. Diese Methode kann ohne Temperaturstabilisierung durchgeführt werden und stellt dennoch einen hohen Dynamikumfang für die Sensorelemente bereit.

Gemäß der Erfindung kann vorgesehen sein, dass in einem Werksabgleich bei Fertigung der IR-Messgeräte für jedes IR-Messgerät eine Kennlinie bestimmt wird, anhand der im späteren Betrieb für die jeweils aktuell herrschenden Umgebungsbedingungen, insbesondere für eine Umgebungstemperatur, eine Integrationsdauer eingestellt wird, mit der eine konstante Empfindlichkeit des Sensorelements bzw. der Sensorelemente des IR-Strahlungsdetektors erzielt wird. Die Umgebungsbedingungen können hierbei durch eine oder mehrere am IR-Messgerät gemessene Temperaturen und/oder durch die Temperatur des IR-Strahlungsdetektor bzw. eines Sensorelements gegeben sein.

Besonders günstig ist es, wenn der Werksabgleich so ausgelegt ist, dass das IR-Messgerät oder zumindest alle diejenigen Bestandteile oder Module des IR-Messgeräts, die eine Empfindlichkeitsänderung bei sich ändernder Umgebungstemperatur zeigen, in einer Temperaturkammer verschiedenen Umgebungstemperaturen ausgesetzt werden. Hierbei wird bei jeder in der Temperaturkammer eingestellter Umgebungstemperatur die Empfindlichkeit des IR-Messgeräts durch Wahl einer Integrationsdauer so eingestellt, dass die Temperaturabhängigkeit des IR-Messgeräts weitgehend minimiert oder sogar eliminiert wird.

Vorzugsweise ist vorgesehen, dass die Empfindlichkeit des IR-Messgeräts anhand von Messungen an wenigstens zwei Strahlungsquellen bestimmt wird. Als Referenz wird der ausgelesene Wert eines in oder an dem IR-Messgerät angebrachten Temperatursensors verwendet.

Mit der Erfindung ist es somit möglich, sämtliche Temperatureinflüsse sowohl des IR-Strahlungsdetektors als auch der an diesen angeschlossenen Elektronik auf die Messsignale des IR-Messgeräts zu berücksichtigen. Somit ist es möglich, eine konstante optische Empfindlichkeit des IR-Messgeräts zu erreichen.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination einzelner Merkmale der Ansprüche untereinander und/oder mit Merkmalen des Ausführungsbeispiels.

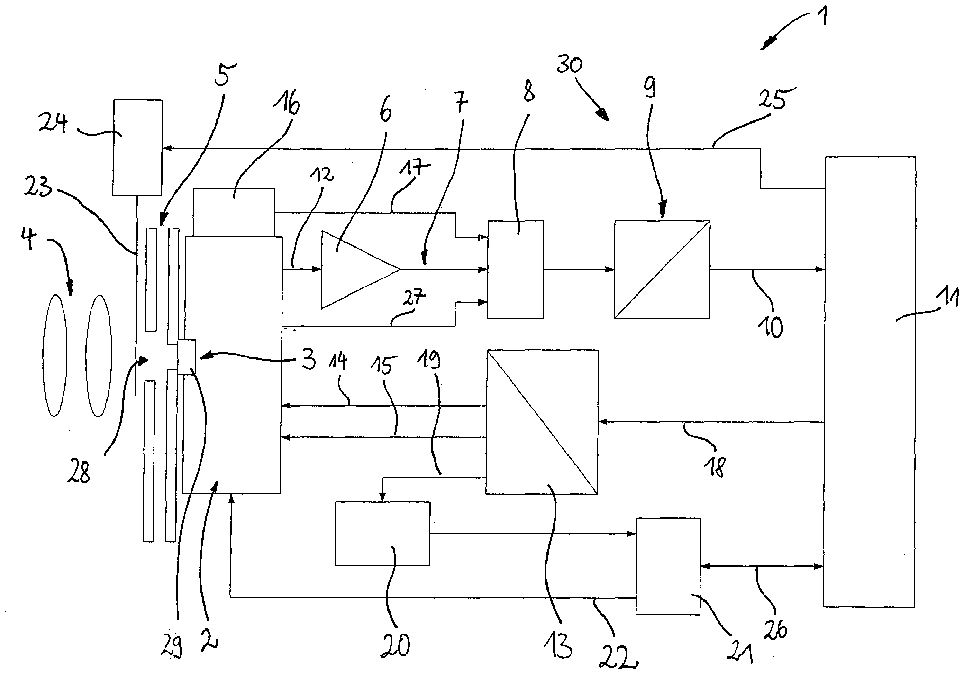

Es zeigt die einzige Figur einen Schaltungsaufbau einer erfindungsgemäßen Wärmebildkamera in schematischer Darstellung.

Die Figur zeigt ein IR-Messgerät, welches als eine im ganzen mit 1 bezeichnete Wärmebildkamera ausgebildet ist.

Die Wärmebildkamera 1 hat einen IR-Strahlungsdetektor 2. Der IR-Strahlungsdetektor 2 weist ein FPA 3 mit einer gitterartigen Anordnung von Bolometern 29 auf.

Diese Bolometer 29 sind für infrarote Strahlung empfindlich, die über eine IR-Optik 4 und ein Blendensystem 5 auf das FPA 3 gelangt.

Die auftreffende IR-Strahlung erzeugt in dem FPA 3 Ausgangssignale, welche mit einem Video-Verstärker 6 erfasst und als Video-Signal 7 über einen Multiplexer 8 einem AD-Wandler 9 zugeführt werden. Der AD-Wandler 9 wandelt das Video-Signal 7 in ein digitales Signal 10 um, welches einem Controller 11 zugeführt wird.

Der Controller 11 dient zur Steuerung des Systems. Er umfasst somit Teile der Auswerteelektronik 30 zur Auswertung der Ausgangssignale 12 der Bolometer 29 im FPA 3. Der AD-Wandler 9 bildet ebenfalls einen Teil der Auswerteelektronik 30.

Der Controller 11 steuert einen DA-Wandler 13 an, der aufgrund dieser Ansteuerung Steuerspannungen 14 und 15 zur Versorgung des IR-Strahlungsdetektors 2 bereitstellt. Die Steuerspannung 14 dient üblicherweise zur Anpassung des gain, während die Steuerspannung 15 zur Anpassung des offset verwendet wird. Beim vorliegenden Ausführungsbeispiel der Erfindung wird die Spannung 14 jedoch auf einem vorgegebenen Wert konstant gehalten.

An das FPA 3 des IR-Strahlungsdetektors 2 ist ein nicht weiter ersichtlicher, integrierter Temperatursensor thermisch gut wärmeleitend angekoppelt. Das Ausgangssignal 27 dieses Temperatursensors des FPA 3 wird über den gemeinsam genutzten Multiplexer 8 dem AD-Wandler 9 zugeführt, der das Ausgangssignal 27 in digitalisierter Form dem Controller 11 zuführt.

Der Controller 11 erzeugt in Abhängigkeit von dem erfassten Ausgangssignal 27 des Temperatursensors des FPA 3 ein Steuersignal 18, welches den DA-Wandler 13 derart ansteuert, dass eine definierte Analogspannung 19 einem spannungsgesteuerten Oszillator 20 (Voltage Controlled Oscillator VCO) zugeführt wird. Durch diese Analogspannung 19 wird die VCO-Frequenz und damit der Systemtakt für den Takt-Datenspeicher 21 so eingestellt, dass die Integrationsdauer an dem IR-Strahlungsdetektor 2 gerade so lang bemessen ist, dass die Steigungsempfindlichkeit über der Temperatur an dem IR-Strahlungsdetektor 2 nahezu konstant und unabhängig von der mit dem Temperatursensor des FPA 3 erfassten Temperatur gehalten wird. Hierbei wird die Integrationsdauer durch das Anliegen eines Integrationssignals 22 an dem IR-Strahlungsdetektor 2 vorgegeben. Somit wird eine temperaturinduzierte Drift des IR-Strahlungs-detektors 2 durch Variation der Integrationsdauer kompensiert.

Durch das beschriebene Zusammenspiel des Controllers 11 mit dem spannungsgesteuerten Oszillator sind somit Mittel zur Beeinflussung der Integrationsdauer ausgebildet, die derart eingerichtet sind, dass eine temperaturinduzierte Drift des IR-Strahlungsdetektors 2 kompensiert ist.

Während der Integrationsdauer wird die über ein Bolometer 29 fließende Ladungsmenge dadurch bestimmt, dass die innerhalb der Integrationsdauer mit einer vorgegebenen Spannung über das Bolometer 29 auf einer nicht weiter gezeigten Kapazität angesammelte Ladungsmenge bestimmt wird. Hierzu sind in den IR-Strahlungsdetektor 2 Mittel zur Erfassung der jeweiligen Ladungsmenge integriert. Dieser Vorgang wird für die Bolometer 29 des FPA 3 zyklisch wiederkehrend durchgeführt und zur Generierung des Ausgangssignals 12 weiterverarbeitet.

Die beschriebene Kompensation wird vorzugsweise außerhalb der eigentlichen Messzeiten des IR-Strahlungsdetektor 2 durchgeführt, indem während der Kompensation der Strahlengang vor dem FPA 3 durch einen Shutter 23 verschlossen wird.

Die beschriebene Kompensation kann alternativ auch während der Messzeiten ausgeführt werden.

Der Shutter 23 wird durch eine Schließeinrichtung 24, die als Motor ausgebildet sein kann, betätigt. Diese Schließeinrichtung 24 wird über ein Schließsignal 25 von dem Controller 11 ausgelöst, wodurch der Shutter 23 vor die Blendenöffnung 28 des Blendensystems 5 gebracht wird.

Der Takt-Datenspeicher 21 ist programmierbar, indem voreingestellte Werte über die Verbindung 26 mit dem Controller 11 ausgetauscht werden. Diese voreingestellten Werte entsprechen einer gewünschten Integrationszeit bei einer definierten FPA-Temperatur.

Zur Berücksichtigung von weiteren Umgebungseinflüssen ist ein weiterer Temperatursensor 16 an einem Gehäuseteil des IR-Strahlungsdetektors 2 angeordnet und an diesen gut wärmeleitend thermisch angekoppelt. Das Ausgangssignal 17 dieses Temperatursensors 16 wird über denselben Multiplexer 8, welcher auch für das Ausgangssignal 27 des Temperatursensors des FPA 3 verwendet wird, an den AD-Wandler 9 geführt und dort digitalisiert. Das digitalisierte Signal 10 wird zur weiteren Verarbeitung dem Controller 11 zugeführt und wird wie zu dem Ausgangssignal 27 beschrieben zum Nachführen der Integrationsdauer verwendet.

Bei einer Kalibrierung der Wärmebildkamera 1 vor Gebrauch oder im Laufe des Gebrauchs wird in einem Temperaturabgleich hierzu eine Kennlinie ermittelt, welche den Zusammenhang zwischen der am FPA 3 oder allgemein am IR-Strahlungsdetektor 2 herrschenden Temperatur und der Steigung, also der Empfindlichkeit, der Bolometer im FPA 3 für eine definierte Szenentemperatur bereitstellt. Im Betrieb des Sensors wird mit Hilfe dieser Kennlinie und der gemessenen Temperatur am Temperatursensor 16 bzw. dem Temperatursensor des FPA 3 die Steigungsempfindlichkeit des IR-Strahlungsdetektors unabhängig von der mit dem Temperatursensor 16 bzw. mit dem Temperatursensor des FPA 3 erfassten Umgebungstemperatur immer auf einem konstanten Wert gehalten. Diese Kennlinie ist in dem Takt-Datenspeicher 21 hinterlegt.

Bei dem IR-Messgerät 1 ist wenigstens ein für infrarote Strahlung sensitives Sensorelement 29 vorgesehen, das ein von der auf das wenigstens eine Sensorelement 29 einfallenden Strahlung abhängiges Ausgangssignal 12 generiert. Es ist vorgesehen, dass das Ausgangssignal 12 zu einer vorgegebenen einfallenden Strahlung durch eine Integrationsdauer variierbar ist und dass die an dem wenigstens einen Sensorelement 29 vorliegende momentane Temperatur erfasst und zu einer derartigen Variation der Integrationsdauer verwendet wird, die den Einfluss der Temperaturschwankungen auf das Ausgangssignal 12 bzw. die Empfindlichkeit des wenigstens einen Sensorelements 29 kompensiert.

## Patentansprüche

1. IR-Messgerät (1) mit einem IR-Strahlungsdetektor (2) mit wenigstens einem Sensorelement (29), welches für infrarote Strahlung sensitiv ist, wobei das wenigstens eine Sensorelement (29) als Bolometer ausgebildet ist und an eine Auswerteelektronik (9, 11, 30) angeschlossen ist, mit welcher Auswerteelektronik (9, 11, 30) ein von einer Integrationsdauer abhängiges Ausgangssignal (12) des wenigstens einen Sensorelements (29) erfassbar ist, **dadurch gekennzeichnet, dass** der IR-Strahlungsdetektor (2) an wenigstens einen Temperatursensor (16) thermisch angekoppelt ist und dass Mittel (11, 20, 21) zur Beeinflussung der Integrationsdauer durch ein Ausgangssignal (17, 27) des wenigstens einen Temperatursensors (16) ausgebildet und derart eingerichtet sind, dass eine temperaturinduzierte Drift des IR-Strahlungsdetektors (2) zumindest teilweise kompensiert ist, wobei in einer Kennlinie der Zusammenhang zwischen der am IR-Strahlungsdetektor (2) herrschenden Temperatur und der Empfindlichkeit der Bolometer im IR-Strahlungsdetektor (2) für eine definierte Szenetemperatur bereitgestellt ist.

2. IR-Messgerät nach Anspruch 1, **dadurch gekennzeichnet, dass** das IR-Messgerät (1) als ein Pyrometer ausgebildet ist.

3. IR-Messgerät nach Anspruch 1 oder 2, **dadurch gekennzeichnet, dass** das IR-Messgerät als eine Wärmebildkamera (1) ausgebildet ist.

4. IR-Messgerät nach einem der Ansprüche 1 bis 3, **dadurch gekennzeichnet, dass** der IR-Strahlungsdetektor (2) eine gitterartige Anordnung (3) von Sensorelementen (29) aufweist, die an die Auswerteelektronik (9, 11, 30) angeschlossen sind.

5. IR-Messgerät nach einem der Ansprüche 1 bis 4, **dadurch gekennzeichnet, dass** zur Erfassung des von einer Integrationsdauer abhängigen Ausgangssignals (12) Mittel zur Erfassung einer innerhalb der Integrationsdauer über das Sensorelement fließenden Ladungsmenge, insbesondere Mittel zur Bestimmung der innerhalb der Integrationsdauer mit einer vorgegebenen Spannung (14, 15) über das wenigstens eine Sensorelement (29) auf einer Kapazität angesammelten Ladungsmenge, ausgebildet sind.

6. IR-Messgerät nach einem der Ansprüche 1 bis 5, **dadurch gekennzeichnet, dass** das wenigstens eine Sensorelement (29), insbesondere alle Sensorelemente (29) in der gitterförmigen Anordnung (3), an einem Substrat gehalten ist/sind und dass mit dem wenigstens einen Temperatursensor die Temperatur des Substrats erfassbar ist.

7. IR-Messgerät nach einem der Ansprüche 1 bis 6, **dadurch gekennzeichnet, dass** ein zweiter Temperatursensor (16) vorgesehen ist, mit welchem die Temperatur eines Gehäuses des IR-Strahlungsdetektors (2) erfassbar ist, und dass Mittel (11, 20, 21) zur Beeinflussung der Integrationsdauer durch ein Ausgangssignal (17) des zweiten Temperatursensors (16) ausgebildet und derart eingerichtet sind, dass eine temperaturinduzierte Drift des IR-Strahlungsdetektors (2) zumindest teilweise kompensiert ist.

8. IR-Messgerät nach einem der Ansprüche 1 bis 7, **dadurch gekennzeichnet, dass** die Integrationsdauer durch einen Taktgenerator (20, 21) bestimmt ist.

9. IR-Messgerät nach einem der Ansprüche 1 bis 8, **dadurch gekennzeichnet, dass** die Auswerteelektronik (9, 11, 30) einen Analog-Digital-Wandler (9) hat, welcher die Ausgangssignale (12, 7) des wenigstens einen Sensorelements (29) und/oder des wenigstens einen Temperatursensors (16) einem Controller (11) in digitaler Form bereitstellt.

10. IR-Messgerät nach Anspruch 9, **dadurch gekennzeichnet, dass** der Controller (11) Mittel zur Beeinflussung der Integrationsdauer, insbesondere Mittel (13) zur Ansteuerung (18, 26) des Taktgenerators (20, 21) aufweist.

11. IR-Messgerät nach einem der Ansprüche 1 bis 10, **dadurch gekennzeichnet, dass** eine elektronische Schaltung (13) vorgesehen ist, die zur Steuerung des wenigstens einen Sensorelements (29) mit einer konstanten Steuerspannung (14) eingerichtet ist.

12. Verfahren zur Kompensation einer temperaturinduzierten Drift eines IR-Strahlungsdetektors (2) eines IR-Messgeräts (1), wobei der IR-Strahlungsdetektor (2) wenigstens ein Sensorelement (29) aufweist, wobei das wenigstens eine Sensorelement (29) als Bolometer ausgebildet ist und an eine Auswerteelektronik (9, 11, 30) angeschlossen ist, wobei die Auswerteelektronik (9, 11, 30) ein von einer Integrationsdauer abhängiges Ausgangssignal (17) des wenigstens einen Sensorelements (29) erfasst, **dadurch gekennzeichnet, dass** der IR-Strahlungsdetektor (2) an wenigstens einen Temperatursensor (16) thermisch angekoppelt ist und dass ein Ausgangssignal (17, 27) des Temperatursensors (16) die Integrationsdauer derart beeinflusst, dass eine temperaturinduzierte Drift des IR-Strahlungsdetektors (2) zumindest teilweise kompensiert wird, wobei in einer Kennlinie der Zusammenhang zwischen der am IR-Strahlungsdetektor (2) herrschenden Temperatur und der Empfindlichkeit der Bolometer im IR-Strahlungsdetektor (2) für eine definierte Szenetemperatur bereitgestellt wird.

13. Verfahren nach Anspruch 12, **dadurch gekennzeichnet, dass** der IR-Strahlungsdetektor (2) eine gitterartige Anordnung (3) von Sensorelementen (29) hat, die von der Auswerteelektronik (9, 11, 30) ausgewertet werden.

14. Verfahren nach Anspruch 12 oder 13, **dadurch gekennzeichnet, dass** zur Erfassung des von der Integrationsdauer abhängigen Ausgangssignals (12) eine innerhalb der Integrationsdauer über das Sensorelement fließenden Ladungsmenge, insbesondere eine innerhalb der Integrationsdauer mit einer vorgegebenen Spannung (14, 15) über das Sensorelement auf einer Kapazität angesammelten Ladungsmenge, bestimmt wird.

15. Verfahren nach einem der Ansprüche 12 bis 14, **dadurch gekennzeichnet, dass** mit dem wenigstens einen Temperatursensor die Temperatur des wenigstens einen Sensorelements (29), insbesondere eine gemittelte Temperatur von mehreren oder sogar allen Sensorelementen (29) in der gitterförmigen Anordnung (3) von Sensorelementen (29), erfasst wird.

16. Verfahren nach einem der Ansprüche 12 bis 15, **dadurch gekennzeichnet, dass** ein zweiter Temperatursensor (16) verwendet wird, mit welchem die Temperatur eines Gehäuses des IR-Strahlungsdetektors (2) erfasst wird, und dass ein Ausgangssignal (17) des zweiten Temperatursensors (16) die Integrationsdauer derart beeinflusst, dass eine temperaturinduzierte Drift des IR-Strahlungsdetektors zumindest teilweise kompensiert wird.

17. Verfahren nach einem der Ansprüche 12 bis 16, **dadurch gekennzeichnet, dass** die Integrationsdauer durch einen Taktgenerator (20, 21) bestimmt wird.

18. Verfahren nach einem der Ansprüche 12 bis 17, **dadurch gekennzeichnet, dass** die Auswerteelektronik (9, 11, 30) einen Analog-Digital-Wandler (9) hat, welcher die Ausgangssignale (7, 17, 27) des wenigstens einen Sensorelements (29) und/oder des wenigstens einen Temperatursensors (16) in digitale Form wandelt und an einen Controller (11) bereitstellt.

19. Verfahren nach einem der Ansprüche 12 bis 18, **dadurch gekennzeichnet, dass** der Controller (11) die Integrationsdauer beeinflusst, insbesondere den Taktgenerator (20, 21) ansteuert.

20. Verfahren nach einem der Ansprüche 12 bis 19, **dadurch gekennzeichnet, dass** das wenigstens eine Sensorelement (29) mit einer konstanten Steuerspannung (14) betrieben wird.

## Claims

1. IR measuring device (1) having an IR radiation detector (2) with at least one sensor element (29) which is sensitive to infrared radiation, wherein the at least one sensor element (29) is in the form of a bolometer and is connected to evaluation electronics (9, 11, 30) which can be used to capture an output signal (12) from the at least one sensor element (29), which output signal is dependent on an integration time, **characterized in that** the IR radiation detector (2) is thermally coupled to at least one temperature sensor (16), and **in that** means (11, 20, 21) for influencing the integration time by means of an output signal (17, 27) from the at least one temperature sensor (16) are designed and set up in such a manner that a temperature-induced drift of the IR radiation detector (2) is at least partially compensated for, wherein the relationship between the temperature prevailing at the IR radiation detector (2) and the sensitivity of the bolometers in the IR radiation detector (2) for a defined scene temperature is provided in a characteristic curve.

2. IR measuring device according to Claim 1, **characterized in that** the IR measuring device (1) is in the form of a pyrometer.

3. IR measuring device according to Claim 1 or 2, **characterized in that** the IR measuring device is in the form of a thermal imaging camera (1).

4. IR measuring device according to one of Claims 1 to 3, **characterized in that** the IR radiation detector (2) has a grid-like arrangement (3) of sensor elements (29) which are connected to the evaluation electronics (9, 11, 30).

5. IR measuring device according to one of Claims 1 to 4, **characterized in that**, in order to capture the output signal (12) which is dependent on an integration time, means are designed to capture an amount of charge flowing via the sensor element within the integration time, in particular means are designed to determine the amount of charge accumulated at a capacitance with a predefined voltage (14, 15) across the at least one sensor element (29) within the integration time.

6. IR measuring device according to one of Claims 1 to 5, **characterized in that** the at least one sensor element (29), in particular all sensor elements (29) in the grid-like arrangement (3), is/are held on a substrate, and **in that** the temperature of the substrate can be captured using the at least one temperature sensor.

7. IR measuring device according to one of Claims 1 to 6, **characterized in that** a second temperature sensor (16) is provided and can be used to capture the temperature of a housing of the IR radiation detector (2), and **in that** means (11, 20, 21) for influencing the integration time by means of an output signal (17) from the second temperature sensor (16) are designed and set up in such a manner that a temperature-induced drift of the IR radiation detector (2) is at least partially compensated for.

8. IR measuring device according to one of Claims 1 to 7, **characterized in that** the integration time is determined by a clock generator (20, 21).

9. IR measuring device according to one of Claims 1 to 8, **characterized in that** the evaluation electronics (9, 11, 30) have an analogue/digital converter (9) which makes the output signals (12, 7) from the at least one sensor element (29) and/or from the at least one temperature sensor (16) available to a controller (11) in digital form.

10. IR measuring device according to Claim 9, **characterized in that** the controller (11) has means for influencing the integration time, in particular means (13) for controlling (18, 26) the clock generator (20, 21).

11. IR measuring device according to one of Claims 1 to 10, **characterized in that** an electronic circuit (13) is provided and is set up to control the at least one sensor element (29) with a constant control voltage (14).

12. Method for compensating for a temperature-induced drift of an IR radiation detector (2) of an IR measuring device (1), wherein the IR radiation detector (2) has at least one sensor element (29), wherein the at least one sensor element (29) is in the form of a bolometer and is connected to evaluation electronics (9, 11, 30), wherein the evaluation electronics (9, 11, 30) capture an output signal (17) from the at least one sensor element (29), which output signal is dependent on an integration time, **characterized in that** the IR radiation detector (2) is thermally coupled to at least one temperature sensor (16), and **in that** an output signal (17, 27) from the temperature sensor (16) influences the integration time in such a manner that a temperature-induced drift of the IR radiation detector (2) is at least partially compensated for, wherein the relationship between the temperature prevailing at the IR radiation detector (2) and the sensitivity of the bolometers in the IR radiation detector (2) for a defined scene temperature is provided in a characteristic curve.

13. Method according to Claim 12, **characterized in that** the IR radiation detector (2) has a grid-like arrangement (3) of sensor elements (29) which are evaluated by the evaluation electronics (9, 11, 30) .

14. Method according to Claim 12 or 13, **characterized in that**, in order to capture the output signal (12) which is dependent on the integration time, an amount of charge flowing via the sensor element within the integration time, in particular an amount of charge accumulated at a capacitance with a predefined voltage (14, 15) across the sensor element within the integration time, is determined.

15. Method according to one of Claims 12 to 14, **characterized in that** the temperature of the at least one sensor element (29), in particular an average temperature of a plurality of or even all sensor elements (29) in the grid-like arrangement (3) of sensor elements (29), is captured using the at least one temperature sensor.

16. Method according to one of Claims 12 to 15, **characterized in that** a second temperature sensor (16) is used and is used to capture the temperature of a housing of the IR radiation detector (2), and **in that** an output signal (17) from the second temperature sensor (16) influences the integration time in such a manner that a temperature-induced drift of the IR radiation detector is at least partially compensated for.

17. Method according to one of Claims 12 to 16, **characterized in that** the integration time is determined by a clock generator (20, 21).

18. Method according to one of Claims 12 to 17, **characterized in that** the evaluation electronics (9, 11, 30) have an analogue/digital converter (9) which converts the output signals (7, 17, 27) from the at least one sensor element (29) and/or from the at least one temperature sensor (16) into digital form and makes them available to a controller (11).

19. Method according to one of Claims 12 to 18, **characterized in that** the controller (11) influences the integration time, in particular controls the clock generator (20, 21).

20. Method according to one of Claims 12 to 19, **characterized in that** the at least one sensor element (29) is operated with a constant control voltage (14).

## Revendications

1. Appareil de mesure IR (1) avec un détecteur de rayonnement IR (2) avec au moins un élément de capteur (29), qui est sensible au rayonnement infrarouge, dans lequel ledit au moins un élément de capteur (29) est constitué par un bolomètre, et est raccordé à une électronique d'évaluation (9, 11, 30), électronique d'évaluation (9, 11, 30) avec laquelle il est possible de détecter un signal de sortie (12) dudit au moins un élément de capteur (29) dépendant d'une durée d'intégration, **caractérisé en ce que** le détecteur de rayonnement IR (2) est thermiquement couplé à au moins un capteur de température (16), et **en ce que** des moyens (11, 20, 21) pour influencer la durée d'intégration par un signal de sortie (17, 27) dudit au moins un capteur de température (16) sont réalisés et configurés de telle manière qu'une dérive du détecteur de rayonnement IR (2) induite par la température soit au moins partiellement compensée, dans lequel la relation entre la température régnant au détecteur de rayonnement IR (2) et la sensibilité des bolomètres dans le détecteur de rayonnement IR (2) est fournie dans une courbe caractéristique pour une température définie de la scène.

2. Appareil de mesure IR selon la revendication 1, **caractérisé en ce que** l'appareil de mesure IR (1) est constitué par un pyromètre.

3. Appareil de mesure IR selon la revendication 1 ou 2, **caractérisé en ce que** l'appareil de mesure IR est constitué par une caméra thermique (1).

4. Appareil de mesure IR selon l'une quelconque des revendications 1 à 3, **caractérisé en ce que** le détecteur de rayonnement IR (2) présente un agencement en forme de grille (3) d'éléments de capteur (29), qui sont reliés à l'électronique d'évaluation (9, 11, 30).

5. Appareil de mesure IR selon l'une quelconque des revendications 1 à 4, **caractérisé en ce que** pour la détection d'un signal de sortie (12) dépendant d'une durée d'intégration, des moyens sont configurés pour la détection d'une quantité de charge s'écoulant via l'élément de capteur à l'intérieur de la durée d'intégration, en particulier des moyens sont configurés pour la détermination d'une quantité de charge accumulée sur une capacité avec une tension prédéterminée (14, 15) via ledit au moins un élément de capteur (29) à l'intérieur de la durée d'intégration.

6. Appareil de mesure IR selon l'une quelconque des revendications 1 à 5, **caractérisé en ce que** ledit au moins un élément de capteur (29), en particulier tous les éléments de capteur (29) dans l'agencement en forme de grille (3), est/sont maintenu(s) sur un substrat et **en ce que** la température du substrat peut être détectée avec ledit au moins un capteur de température.

7. Appareil de mesure IR selon l'une quelconque des revendications 1 à 6, **caractérisé en ce qu'**il est prévu un second capteur de température (16), avec lequel la température d'un boîtier du détecteur de rayonnement IR (2) peut être détectée, et **en ce que** des moyens (11, 20, 21) pour influencer la durée d'intégration par un signal de sortie (17) du second capteur de température (16) sont réalisés et configurés de telle manière qu'une dérive du détecteur de rayonnement IR (2) induite par la température soit au moins partiellement compensée.

8. Appareil de mesure IR selon l'une quelconque des revendications 1 à 7, **caractérisé en ce que** la durée d'intégration est déterminée par un générateur d'horloge (20, 21).

9. Appareil de mesure IR selon l'une quelconque des revendications 1 à 8, **caractérisé en ce que** l'électronique d'évaluation (9, 11, 30) comporte un convertisseur analogique-numérique (9), qui fournit les signaux de sortie (12, 7) dudit au moins un élément de capteur (29) et/ou dudit au moins un capteur de température (16) sous forme numérique à un contrôleur (11).

10. Appareil de mesure IR selon la revendication 9, **caractérisé en ce que** le contrôleur (11) présente des moyens pour influencer la durée d'intégration, en particulier des moyens (13) pour commander (18, 26) le générateur d'horloge (20, 21).

11. Appareil de mesure IR selon l'une quelconque des revendications 1 à 10, **caractérisé en ce qu'**il est prévu un circuit électronique (13), qui est configuré pour commander ledit au moins un élément de capteur (29) avec une tension de commande constante (14).

12. Procédé de compensation d'une dérive, induite par la température, d'un détecteur de rayonnement IR (2) d'un appareil de mesure IR (1), dans lequel le détecteur de rayonnement IR (2) présente au moins un élément de capteur (29), dans lequel ledit au moins un élément de capteur (29) est constitué par un bolomètre et est raccordé à une électronique d'évaluation (9, 11, 30), dans lequel l'électronique d'évaluation (9, 11, 30) détecte un signal de sortie (17) dudit au moins un élément de capteur (29) dépendant d'une durée d'intégration, **caractérisé en ce que** le détecteur de rayonnement IR (2) est thermiquement couplé à au moins un capteur de température (16), et **en ce qu'**un signal de sortie (17, 27) du capteur de température (16) influence la durée d'intégration de telle manière qu'une dérive du détecteur de rayonnement IR (2) induite par la température soit au moins partiellement compensée, dans lequel la relation entre la température régnant au détecteur de rayonnement IR (2) et la sensibilité des bolomètres dans le détecteur de rayonnement IR (2) est fournie dans une courbe caractéristique pour une température définie de la scène.

13. Procédé selon la revendication 12, **caractérisé en ce que** le détecteur de rayonnement IR (2) comporte un agencement en forme de grille (3) d'éléments de capteur (29), que l'on évalue au moyen de l'électronique d'évaluation (9, 11, 30).

14. Procédé selon la revendication 12 ou 13, **caractérisé en ce que** pour la détection du signal de sortie (12) dépendant de la durée d'intégration on détermine une quantité de charge s'écoulant via l'élément de capteur à l'intérieur de la durée d'intégration, en particulier une quantité de charge accumulée sur une capacité avec une tension prédéterminée (14, 15) via l'élément de capteur à l'intérieur de la durée d'intégration.

15. Procédé selon l'une quelconque des revendications 12 à 14, **caractérisé en ce que** l'on détecte avec ledit au moins un capteur de température la température dudit au moins un élément de capteur (29), en particulier une température moyenne de plusieurs ou même de tous les éléments de capteur (29) dans l'agencement en forme de grille (3) d'éléments de capteur (29).

16. Procédé selon l'une quelconque des revendications 12 à 15, **caractérisé en ce que** l'on utilise un second capteur de température (16), avec lequel on détecte la température d'un boîtier du détecteur de rayonnement IR (2), et **en ce qu'**un signal de sortie (17) du second capteur de température (16) influence la durée d'intégration de telle manière qu'une dérive du détecteur de rayonnement IR (2) induite par la température soit au moins partiellement compensée.

17. Procédé selon l'une quelconque des revendications 12 à 16, **caractérisé en ce que** l'on détermine la durée d'intégration au moyen d'un générateur d'horloge (20, 21).

18. Procédé selon l'une quelconque des revendications 12 à 17, **caractérisé en ce que** l'électronique d'évaluation (9, 11, 30) comporte un convertisseur analogique-numérique (9), qui convertit les signaux de sortie (7, 17, 27)) dudit au moins un élément de capteur (29) et/ou dudit au moins un capteur de température (16) sous forme numérique et les fournit à un contrôleur (11).

19. Procédé selon l'une quelconque des revendications 12 à 18, **caractérisé en ce que** le contrôleur (11) influence la durée d'intégration, en particulier commande le générateur d'horloge (20, 21).

20. Procédé selon l'une quelconque des revendications 12 à 19, **caractérisé en ce que** l'on fait fonctionner ledit au moins un élément de capteur (29) avec une tension de commande constante (14).
